# FASCICULE DE BREVET EUROPEEN

(11) **EP 2 577 568 B1**
(45) Date de publication et mention de la délivrance du brevet: **16.09.2020**
(21) Numéro de dépôt: 11722090.5
(22) Date de dépôt: 31.05.2011
(51) Int. Cl.: G06K 19/07, G06K 19/073, G06K 19/077

(54) **Carte bancaire avec écran d'affichage**
Bankkarte mit Displayanzeige
Bank card with display screen

(30) Priorité: 31.05.2010 EP 10305571
(43) Date de publication de la demande: 10.04.2013
(73) Titulaire: Thales Dis France SA, 92190 Meudon (FR)
(72) Inventeur: MARSEILLE, François-Xavier, F-92197 Meudon (FR); GRAVEZ, Pierre, F-92197 Meudon (FR); THILL, Michel, F-92197 Meudon (FR)
(74) Mandataire: Cassagne, Philippe M.J.
(86) Numéro de dépôt international: PCT/EP2011/058914
(87) Numéro de publication internationale: WO 2011/151309

(56) Documents cités:
- WO-A1-2010/022129
- US-A1- 2007 290 049
- US-A1- 2009 240 625

## Description

L'invention se rapporte à une carte bancaire avec un écran d'affichage.

Les cartes bancaires disposent de puces électroniques pour sécuriser la transaction. La norme EMV a été crée par Europay, Mastercard et Visa dont les initiales font la norme pour définir un standard d'interopérabilité et de sécurité entre carte à puce bancaire. Pour qu'une carte soit certifiée EMV, il faut que celle-ci dispose d'une puce elle-même certifiée qui dispose d'une interface contact selon la norme ISO7816 et/ou sans contact selon la norme ISO14443. Pour limiter les risques de piratage, les puces EMV ne disposent pas d'autre interface de communication.

Par ailleurs, il est aussi connu de faire des cartes à puce disposant d'un écran et un ou plusieurs boutons-poussoirs pour communiquer avec le porteur de carte. Ces cartes sont peu utilisées à l'heure actuelle et servent à générer et à afficher un mot de passe à usage unique pour des transactions par ordinateur. De telles cartes comportent généralement une puce muni d'une interface de communication de carte à puce contact ou sans contact et d'un port de communication destiné à communiquer avec d'autres circuits intégré tel que par exemple une interface de communication I2C ou encore de ports d'entrée/sortie programmable à usage général (GPIO). Il est alors possible à un microcontrôleur de carte à puce de communiquer avec un contrôleur d'affichage qui pilote un écran à cristaux liquides ou un afficheur dit à « encre Le document WO 2010/022129 A1 divulgue une telle carte à puce.

Une idée serait de faire une carte bancaire disposant d'un écran pour afficher les dernières transactions effectuées. Un problème survient alors si l'on souhaite réaliser une carte à puce au standard EMV. Ces puces ne disposent pas de port d'entrée/sortie supplémentaire pour ce type d'application et pour des raisons de sécurité, il est préféré de ne pas ajouter d'autre ports d'entrée/sortie.

Il n'est donc pas possible de piloter l'affichage à partir d'une puce EMV. Une solution est donc nécessaire pour pouvoir afficher les dernières transactions effectuée sur une carte à puce.

L'invention est une solution au problème posée. Pour permettre l'affichage des dernières transactions, un deuxième microcontrôleur est ajouté sur la carte à puce afin de réaliser une fonction de lecteur de carte pour lire dans la puce EMV les données relatives aux dernières transactions effectuées.

Plus particulièrement, l'invention est une carte à puce pour transaction sécurisée comprenant au moins une puce sécurisée selon la revendication 1.

Préférentiellement, le circuit lecteur n'accède qu'à des informations publiques de la puce sécurisée. Les informations publiques sont les montants des transactions effectuées.

En outre, la carte peut comporter un actionneur pour permettre à un porteur de ladite carte de déclencher une lecture et d'afficher l'information lue. Cet actionneur peut être un capteur de mouvement.

Selon une variante, la carte peut comporter un capteur d'utilisation pour inhiber ou autoriser le fonctionnement du circuit lecteur. Le capteur d'utilisation peut être un capteur de lumière.

Selon différents modes de réalisations, l'interface de communication peut être une interface à contact et dans laquelle le circuit lecteur est relié en parallèle sur les contacts de la carte par l'intermédiaire d'interrupteurs commandés et/ou l'interface de communication peut être une interface sans contact disposant d'une première antenne ayant la forme de spires à l'intérieur de la carte et dans laquelle le circuit lecteur dispose d'une deuxième antenne ayant la forme de spires à l'intérieur de la carte, la première et la deuxième antenne partageant un flux électromagnétique commun. Si la carte dispose d'une interface sans contact, l'interface de communication peut inhiber le fonctionnement du circuit lecteur de carte en cas de détection d'un champ externe. Au cas où la puce sécurisée dispose de deux interfaces de communication, alors au moins une interface de communication est reliée au circuit lecteur.

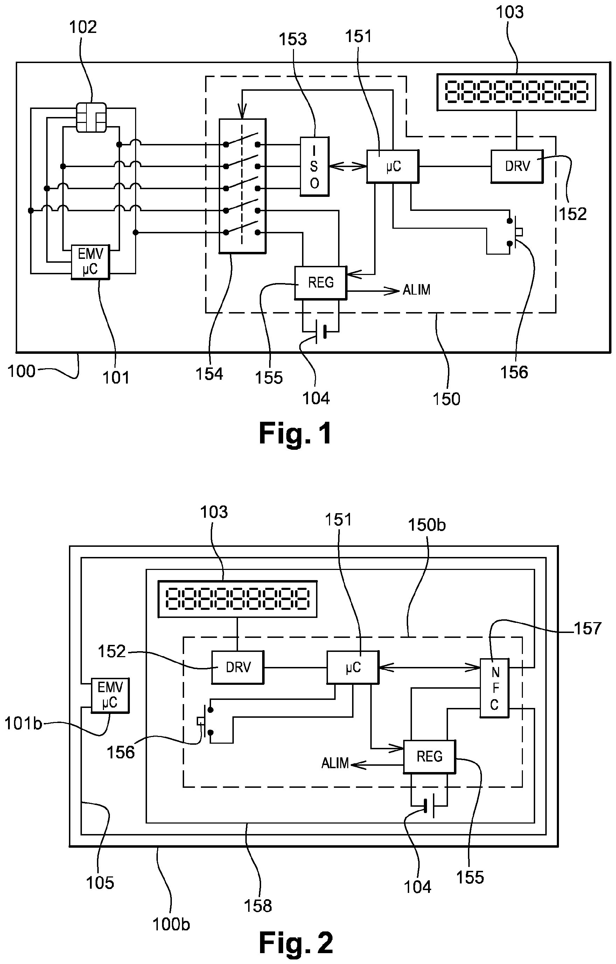

L'invention sera mieux comprise, et d'autres particularités et avantages apparaîtront à la lecture de la description qui va suivre, la description faisant référence aux dessins annexés, parmi lesquels les figures 1 à 3 représentent trois modes de réalisation de l'invention.

La figure 1 représente un schéma fonctionnel d'un premier mode de réalisation de l'invention. Dans ce mode de réalisation, la carte bancaire 100 est une carte à puce à contacts qui comporte une puce sécurisée 101 muni d'une interface de communication conforme à la norme ISO 7816 et reliée à une connecteur 102 comportant des plages de contact également définies par la norme 7816. La puce sécurisé 101 est par exemple une puce répondant au standard EMV et comporte des données à accès restreint et d'autre données dites publiques. Les données à accès restreint nécessitent l'utilisation de mot de passe ou messages cryptés alors que les données publiques peuvent être accédées en lecture et/ou en écriture par tout lecteur conforme à la norme ISO7816.

Lors d'un paiement qui utilise la puce sécurisée 101, la carte bancaire 100 est insérée dans un lecteur sécurisé qui effectue une vérification d'un code PIN rentré par le porteur de la carte pour vérifier que le porteur de la carte est le bon, vient ensuite des échanges d'information sécurisés via des messages cryptés entre la carte, le lecteur et éventuellement un serveur distant pour vérifier si le débit de la carte est autorisé ou non. Lorsque la transaction est terminée, des informations sont mises à jour dans la carte et dans le lecteur pour indiquer le montant de la transaction effectuée et éventuellement le solde restant de la carte. Les montants de transaction effectués qui sont stockés dans la carte n'ayant aucune valeur juridique et n'étant pas porteur d'information confidentielle, ceux-ci sont généralement enregistrés dans une zone de mémoire non sécurisée et donc accessible par n'importe quel type de lecteur conforme à la norme ISO7816.

Afin de réaliser l'affichage des dernières transactions effectuées, la carte bancaire 100 est munie d'un afficheur électronique 103, d'une Batterie 104 et d'un circuit lecteur de carte 150. Le circuit lecteur de carte 150 peut être réalisé en un seul circuit intégré ou comporter éventuellement plusieurs circuits. En terme de fabrication, le circuit lecteur 150 peut être réalisé sur un substrat dans le corps de carte par lamination selon une méthode connue qui dispose de contact avec la face arrière des plages de contact du connecteur 102, selon une technique connue.

L'afficheur électronique 103 peut être de type à cristaux liquides ou de type à encre électronique utilisant des microbilles. L'important est que cet afficheur 103 soit suffisamment fin pour être intégré dans une carte à puce et doit également être à faible consommation. La batterie 104 est une batterie ultra plate intégrable dans une carte à puce. En fonction de la durée de vie désirée de la carte et de la consommation du circuit lecteur 150 et de l'afficheur 103, on peut choisir une batterie rechargeable ou non-rechargeable.

Le circuit lecteur de carte 150 comporte microcontrôleur 151 constituant l'intelligence du dispositif et comportant les programmes nécessaires au fonctionnement de l'ensemble, un circuit de pilotage 152 pour commander l'afficheur électronique 103, une interface de communication 153 conforme à la norme ISO7816 mais du côté lecteur, un circuit d'interruption 154 placé entre l'interface 153 et la puce sécurisée, un régulateur d'alimentation 155, et un bouton poussoir 156.

Le microcontrôleur 151 est l'élément de contrôle général du circuit lecteur de carte. Le circuit de pilotage 152 sert à transformer un nombre à écrire fourni par le microcontrôleur 151 en signaux électriques de commande de l'afficheur électronique 103. Le régulateur d'alimentation 155 sert à transformer la tension fournie par la batterie en tension d'alimentation pour l'afficheur 103, le circuit lecteur 150 et aussi la puce sécurisée lorsque le circuit lecteur lit la carte. Le régulateur d'alimentation 155 peut également servir de chargeur de batterie si la batterie 104 est de type rechargeable. Le rechargement de la batterie s'effectue lorsque la carte est reliée à un lecteur externe pendant une transaction. Il conviendra dans ce cas de ne connecter le régulateur directement aux plages de contact d'alimentation sans passer par le circuit d'interruption 154.

Le bouton poussoir 156 est un actionneur accessible par le porteur de carte pour déclencher le fonctionnement du lecteur de carte. Typiquement, suite à une action sur le bouton poussoir 156, le microcontrôleur 151 va agir sur le circuit d'interruption 154 pour relier la puce sécurisée à l'interface 153 et au régulateur d'alimentation 155, de sorte que la batterie 104 alimente la puce sécurisée 101. Le microcontrôleur 151 va ensuite commander l'interface 153 pour initier une communication avec la puce sécurisée 101 et lire le montant de la dernière transaction effectuée. Cette lecture effectuée, le microcontrôleur 153 va envoyer une séquence de commande au circuit de pilotage 152 pour afficher le montant sur l'afficheur 103.

Un nouvel appui sur le bouton poussoir 156 peut entrainer la lecture et l'affichage de la précédente transaction. Un appui de longue durée peut mettre fin à la lecture des transactions et passer à un mode de veille où l'alimentation de la puce sécurisée 101, de l'afficheur 103, de l'interface 153 et du circuit de pilotage est coupée et où seul l'alimentation du microcontrôleur 151 est assurée pour la partie permettant le réveil via une nouvelle action sur le bouton poussoir. L'absence d'appui sur le bouton poussoir 156 pendant une longue durée prédéterminée, par exemple 1 à 2 minutes provoque la mise en veille du système.

En variante, il est aussi possible que la première action sur le bouton poussoir 156 déclenche une série de lectures de toutes les transactions accessibles dans la puce sécurisée 101. Le microcontrôleur 151 effectue alors un stockage local de ces informations de transaction. Lors d'un autre appui sur le bouton poussoir 156, le microcontrôleur 151 se contente alors d'afficher les transactions précédentes qui ont déjà été lues.

La figure 2 représente un schéma fonctionnel d'un deuxième mode de réalisation de l'invention. Pour des raisons de simplification de description, les éléments communs entre le premier et deuxième mode de réalisation portent les mêmes références et ne seront pas plus amplement décrits. Egalement les éléments équivalents porteront une référence faisant également référence au premier mode de réalisation par l'adjonction d'un « b ».

Dans ce deuxième mode de réalisation, la carte bancaire 100b est une carte à puce sans contact qui comporte une puce sécurisée 101b munie d'une interface de communication conforme à la norme ISO 14443 et reliée à une antenne 105 constituée de spires placées à l'intérieur du corps de carte. La puce sécurisée 101b est par exemple une puce répondant au standard EMV et comporte des données à accès restreint et d'autres données dites publiques. Les données à accès restreint nécessitent l'utilisation de mots de passe ou messages cryptés alors que les données publiques peuvent être accédées en lecture et/ou en écriture par tout lecteur conforme à la norme ISO14443.

Lors d'un paiement qui utilise la puce sécurisée 101b, la carte bancaire 100b est placée devant l'antenne d'un lecteur sécurisé, des échanges d'informations sécurisés via des messages cryptés entre la carte, le lecteur et éventuellement un serveur distant sont effectués pour vérifier si le débit de la carte est autorisé ou non. Lorsque la transaction est terminée, des informations sont mises à jour dans la carte et dans le lecteur pour indiquer le montant de la transaction effectuée et éventuellement le solde restant de la carte. Les montants de transaction effectués qui sont stockés dans la carte n'ayant aucune valeur juridique et n'étant pas porteur d'information confidentielle, ceux-ci sont généralement enregistrés dans une zone de mémoire non sécurisée et donc accessible par n'importe quel type de lecteur conforme à la norme ISO14443.

Afin de réaliser l'affichage des dernières transactions effectuées, la carte bancaire 100b est munie d'un afficheur électronique 103, d'une Batterie 104 et d'un circuit lecteur de carte 150b. Le circuit lecteur de carte 150b diffère du premier mode de réalisation par l'utilisation d'une interface de communication 157 conforme à la norme ISO 14443 et reliée à une antenne 158. L'antenne 158 est une antenne composée de plusieurs spires et est également placée à l'intérieur du corps de carte. Les antennes 105 et 158 sont réalisées afin de partager un flux électromagnétique commun afin d'autoriser l'alimentation de la puce sécurisée 101b par couplage d'antenne et la communication entre la puce sécurisée 101b et l'interface 157. Ces deux antennes sont en outre configurées pour ne pas se perturber lorsqu'elles partagent le flux électromagnétique d'un lecteur situé hors carte.

L'interface 157 permet également de récupérer de l'énergie d'un lecteur externe afin de permettre de recharger la batterie 104 par l'intermédiaire du régulateur d'alimentation 104. En outre cette interface 157 permet de détecter un champ externe créé par un autre lecteur et peut permettre d'inhiber le fonctionnement du circuit lecteur de carte 150b en cas de détection afin d'éviter de perturber une transaction.

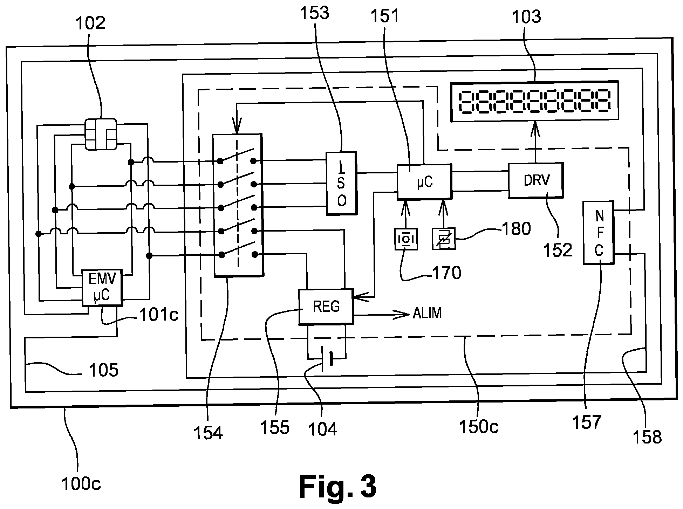

La figure 3 représente un schéma fonctionnel d'un troisième mode de réalisation de l'invention qui en outre incorpore des améliorations qui peuvent aussi être utilisées en combinaison avec l'un des modes de réalisation précédemment décrits. Pour des raisons de simplification de description, les éléments communs entre le premier, le deuxième et le troisième mode de réalisation portent les mêmes références et ne seront pas plus amplement décrit. Egalement les éléments équivalents porteront une référence faisant également référence aux autres mode de réalisation par l'adjonction d'un « c ».

Dans ce troisième mode de réalisation, la carte bancaire 100c est une carte à puce mixte qui comporte une puce sécurisée 101c munie d'une interface de communication conforme à la norme ISO 7816 qui reliée à un connecteur 102 comportant des plages de contact également définies par la norme 7816 et également munies d'une interface de communication conforme à la norme ISO 14443 et reliée à une antenne 105 constituée de spires placées à l'intérieur du corps de carte. La puce sécurisée 101c est par exemple une puce répondant au standard EMV et comporte des données à accès restreint et d'autres données dites publiques. Les données à accès restreint nécessitent l'utilisation de mot de passe ou messages cryptés alors que les données publiques peuvent être accédées en lecture et/ou en écriture par tout lecteur conforme à la norme ISO7816 ou conforme à la norme ISO14443.

Afin de réaliser l'affichage des dernières transactions effectuées, la carte bancaire 100c est munie d'un afficheur électronique 103, d'une Batterie 104 et d'un circuit lecteur de carte 150c. Le circuit lecteur de carte 150c diffère des deux modes de réalisation précédents par l'utilisation à la fois d'une interface de communication 153 conforme à la norme ISO7816 et un circuit d'interruption 154 placé entre l'interface 153 et la puce sécurisée, et d'une interface de communication 157 conforme à la norme ISO 14443 et reliée à une antenne 158. Dans la pratique une seule interface 153 ou 157 peut suffire si la puce sécurisée 101c dispose de registres accessibles indépendamment du type d'interface de communication utilisé.

Parmi les autres changements, le bouton poussoir 156 est remplacé par un accéléromètre 170 afin d'éviter des problèmes d'usure et de faux contacts liés à l'utilisation des boutons poussoirs qui sont particulièrement sensibles sur les cartes à puce. Ainsi un geste permet de mettre en tension le lecteur pour effectuer une lecture de carte et il est possible d'utiliser des signatures de mouvement pour pouvoir distinguer si l'on souhaite voir un type de transaction particulier.

Egalement, l'utilisation d'un bouton poussoir ou même d'un accéléromètre peut actionner le circuit lecteur alors que la carte est déjà dans un lecteur. Ce double accès peut être générateur de problème. Afin de remédier aux éventuels problèmes, l'utilisation d'un capteur de lumière 180 couplé avec le microcontrôleur 151 permet de ne pas alimenter la puce sécurisée 101c par la batterie 104 et bloque toute communication de la carte si le capteur ne capte pas une lumière suffisante. Cela permet en outre d'éviter de décharger la batterie par un actionnement intempestif dans une poche soumise à contraintes.

## Revendications

1. Carte à puce (100, 100b, 100c) pour transaction sécurisée comprenant au moins une puce sécurisée (101, 101b, 101c) au standard EMV munie d'une interface de communication pour pouvoir communiquer avec un lecteur de carte afin d'effectuer une transaction, **caractérisé en ce que** la carte comporte en outre :
- un afficheur électronique (103),
- une batterie autonome (104),
- un circuit lecteur (150, 150b, 150c) relié à l'interface de communication de la puce sécurisée, comprenant un circuit de pilotage (152) pour commander l'afficheur électronique (103) et un microcontrôleur (151) configuré pour commander la lecture des informations contenues dans la puce sécurisée et leur affichage par le circuit de pilotage sur l'afficheur électronique.

2. Carte selon la revendication 1, dans laquelle le circuit lecteur n'accède qu'à des informations publiques de la puce sécurisée.

3. Carte selon la revendication 2, dans laquelle les informations publiques sont les montants des transactions effectuées.

4. Carte selon la revendication 1, dans laquelle la carte comporte un actionneur (156, 170) pour permettre à un porteur de ladite carte de déclencher une lecture et d'afficher l'information lue.

5. Carte selon la revendication 4, dans laquelle l'actionneur est un capteur de mouvement (170).

6. Carte selon la revendication 1, dans laquelle la carte comporte un capteur d'utilisation (180) pour inhiber ou autoriser le fonctionnement du circuit lecteur.

7. Carte selon la revendication 6, dans laquelle le capteur d'utilisation est un capteur de lumière (180).

8. Carte selon la revendication 1, dans laquelle l'interface de communication est une interface à contact et dans laquelle le circuit lecteur est relié en parallèle sur les contacts de la carte par l'intermédiaire d'interrupteurs commandés (154).

9. Carte selon la revendication 1, dans laquelle l'interface de communication est une interface sans contact disposant d'une première antenne (105) ayant la forme de spires à l'intérieur de la carte et dans laquelle le circuit lecteur (150b, 150c) dispose d'une deuxième antenne (158) ayant la forme de spires à l'intérieur de la carte, la première et la deuxième antenne (105, 158) partageant un flux électromagnétique commun.

10. Carte selon la revendication 9, dans laquelle l'interface de communication inhibe le fonctionnement du circuit lecteur en cas de détection d'un champ externe.

11. Carte selon la revendication 1, dans laquelle la puce sécurisée dispose de deux interfaces de communication et dans laquelle au moins une interface de communication est reliée au circuit lecteur.

12. Carte selon la revendication 1, dans laquelle l'interface de communication est conforme au standard IS07816 et/ou au standard IS014443, et dans laquelle le circuit lecteur (150, 150b, 150c) est un lecteur conforme au standard ISO7816 et/ou au standard ISO14443.

## Patentansprüche

1. Smartcard (100, 100b, 100c) für sichere Transaktion, die mindestens einen sicheren Chip (101, 101b, 101c) nach der EMV-Norm umfasst, der mit einer Kommunikationsschnittstelle versehen ist, um mit einem Kartenlesegerät kommunizieren zu können, um eine Transaktion auszuführen, **dadurch gekennzeichnet, dass** die Karte ferner umfasst:
- eine elektronische Anzeige (103),
- eine autonome Batterie (104),
- eine Leseschaltung (150, 150b, 150c), die mit der Kommunikationsschnittstelle des sicheren Chips verbunden ist, und eine Steuerschaltung (152) zum Steuern der elektronischen Anzeige (103) und einen Mikrocontroller (151) umfasst, der zum Steuern des Lesens der Informationen, die in dem sicheren Chip enthalten sind, und zu deren Anzeige durch die Steuerschaltung auf der elektronischen Anzeige konfiguriert ist.

2. Karte nach Anspruch 1, wobei die Leseschaltung nur auf öffentliche Informationen des sicheren Chips zugreift.

3. Karte nach Anspruch 2, wobei die öffentlichen Informationen die Beträge der ausgeführten Transaktionen sind.

4. Karte nach Anspruch 1, wobei die Karte einen Auslöser (156, 170) umfasst, um es einem Inhaber der Karte zu ermöglichen, ein Lesen auszulösen und die gelesenen Informationen anzuzeigen.

5. Karte nach Anspruch 4, wobei der Auslöser ein Bewegungssensor (170) ist.

6. Karte nach Anspruch 1, wobei die Karte einen Verwendungssensor (180) umfasst, um den Betrieb der Leseschaltung zu inhibieren oder zu gestatten.

7. Karte nach Anspruch 6, wobei der Verwendungssensor ein Lichtsensor (180) ist.

8. Karte nach Anspruch 1, wobei die Kommunikationsschnittstelle eine Kontaktschnittstelle ist, und wobei die Leseschaltung über gesteuerte Schalter (154) zu den Kontakten der Karte parallel geschaltet ist.

9. Karte nach Anspruch 1, wobei die Kommunikationsschnittstelle eine kontaktlose Schnittstelle ist, die über eine erste Antenne (105) verfügt, die die Form von Windungen in dem der Karte aufweist, und wobei die Leseschaltung (150b, 150c) über eine zweite Antenne (158) verfügt, die die Form von Windungen in dem Inneren der Karte aufweist, wobei sich die erste und die zweite Antenne (105, 158) einen gemeinsamen elektromagnetischen Fluss teilen.

10. Karte nach Anspruch 9, wobei die Kommunikationsschnittstelle den Betrieb der Leseschaltung im Falle einer Erfassung eines externen Felds verhindert.

11. Karte nach Anspruch 1, wobei der sichere Chip über zwei Kommunikationsschnittstellen verfügt und wobei mindestens eine Kommunikationsschnittstelle mit der Leseschaltung verbunden ist.

12. Karte nach Anspruch 1, wobei die Kommunikationsschnittstelle der Norm IS07816 und/oder der Norm IS014443 entspricht, und wobei die Leseschaltung (150, 150b, 150c) ein Lesegerät gemäß der Norm IS07816 und/oder der Norm IS014443 ist.

## Claims

1. A chip card (100, 100b, 100c) for secure transaction, comprising at least one EMV type secure chip (101, 101b, 101c), provided with a communication interface in order to communicate with a card reader in order to perform a transaction, **characterised in that** the card further comprises:
- an electronic display (103),
- an autonomous battery (104),
- a reader circuit (150, 150b, 150c) connected to the communication interface of the secure chip, comprising a control circuit (152) for controlling the electronic display (103) and a microcontroller (151) configured to control the reading of information contained in the secure chip and its display by the control circuit on the electronic display.

2. The card according to Claim 1, wherein the reader circuit only accesses public information of the secure chip.

3. The card according to Claim 2, wherein the public information is the amounts of the transactions carried out.

4. The card according to Claim 1, wherein the card includes an actuator (156, 170) in order to allow a holder of said card to initiate a reading and to display the information read.

5. The card according to Claim 4, wherein the actuator is a motion sensor (170).

6. The card according to Claim 1, wherein the card comprises a use sensor (180) for inhibiting or authorising the operation of the reader circuit.

7. The card according to Claim 6, wherein the use sensor is a light sensor (180).

8. The card according to Claim 1, wherein the communication interface is a contact interface and wherein the reader circuit is connected in parallel to the contacts of the card by means of controlled switches (154).

9. The card according to Claim 1, wherein the communication interface is a contactless interface having a first antenna (105) having the form of turns inside the card and wherein the reader circuit (150b, 150c) has a second antenna (158) having the form of turns inside the card, the first and the second antenna (105, 158) sharing a common electromagnetic flux.

10. The card according to Claim 9, wherein the communication interface inhibits the operation of the reader circuit if an external field is detected.

11. The card according to Claim 1, wherein the secure chip has two communication interfaces and wherein at least one communication interface is connected to the reader circuit.

12. The card according to Claim 1, wherein the communication interface conforms to standard IS07816 and/or to standard IS014443, and wherein the reader circuit (150, 150b, 150c) is a reader conforming to standard IS07816 and/or standard IS014443.
